# EUROPÄISCHE PATENTSCHRIFT

(11) **EP 4 385 761 B1**
(45) Veröffentlichungstag und Bekanntmachung des Hinweises auf die Patenterteilung: **27.08.2025**
(21) Anmeldenummer: 23215378.3
(22) Anmeldetag: 08.12.2023
(51) Int. Cl.: B60C 11/12

(54) **FAHRZEUGLUFTREIFEN**
PNEUMATIC TYRE FOR VEHICLES
BANDAGE PNEUMATIQUE POUR VÉHICULE

(30) Priorität: 12.12.2022 DE 102022213492
(43) Veröffentlichungstag der Anmeldung: 19.06.2024
(73) Patentinhaber: Continental Reifen Deutschland GmbH, 30175 Hannover (DE)
(72) Erfinder: Fuchs, Artur, 30173 Hannover (DE); Brockmann, Jürgen, 30173 Hannover (DE); Heinhaupt, Torsten, 30173 Hannover (DE); Seng, Matthias, 30173 Hannover (DE); Bauer, Claudia, 30173 Hannover (DE); Vennebörger, Martin, 30173 Hannover (DE)
(74) Vertreter: Continental Corporation

(56) Entgegenhaltungen:
- EP-A1- 2 138 330
- EP-A2- 1 277 599
- WO-A1-2015/176958
- JP-A- 2009 012 678
- JP-A- 2017 024 476
- US-A1- 2005 150 581
- US-A1- 2009 000 713
- US-A1- 2013 133 799
- US-A1- 2015 266 346
- ANONYMOUS: "Reifenprofiltiefe | Continental Reifen", 6 March 2021 (2021-03-06), pages 1 - 6, XP093152502, Retrieved from the Internet <URL:https://www.continental-reifen.de/b2c/tire-knowledge/tread-depth/>

## Beschreibung

Die Erfindung betrifft einen Fahrzeugluftreifen mit einem Laufstreifen mit Profilblöcken oder zumindest einer Profilrippe jeweils mit in Draufsicht unter einem Winkel von 0° bis zu 50° zur axialen Richtung verlaufenden, einen Einschnittgrund und eine Einschnittmittelfläche aufweisenden Einschnitten mit einer Breite von 0,4 mm bis 1,2 mm und einer maximalen Tiefe, welche zumindest der um 2,0 mm verringerten Profiltiefe entspricht, wobei jeder Einschnitt zumindest in einem in Draufsicht vorliegenden Teilbereich, im Querschnitt betrachtet, einen zur radialen Richtung geneigten, radial äußeren Einschnittabschnitt, einen bis zum Einschnittgrund reichenden, bezüglich der radialen Richtung gleichsinnig zum radial äußeren Einschnittabschnitt geneigten, radial inneren Einschnittabschnitt und einen zwischen diesen beiden Einschnittabschnitten verlaufenden mittleren Einschnittabschnitt aufweist, wobei die Einschnittmittelfläche am Anschluss des radial äußeren Einschnittabschnittes an den mittleren Einschnittabschnitt eine radial äußere Knickstelle und am Anschluss des mittleren Einschnittabschnittes an den radial inneren Einschnittabschnitt eine radial innere Knickstelle aufweist, wobei der radial äußere Einschnittabschnitt und der radial innere Einschnittabschnitt jeweils eine auf die Einschnittmittelfläche bezogene, in radialer Richtung ermittelte Länge von 2,0 mm bis 3,0 mm aufweisen, wobei die radial innere Knickstelle der Einschnittmittelfläche
a) auf einer in radialer Richtung verlaufenden ersten Bezugslinie, welche am radial äußeren Ende des radial äußeren Einschnittabschnittes durch die Einschnittmittelfläche verläuft,
b) auf einer in radialer Richtung verlaufenden zweiten Bezugslinie, welche durch die radial äußere Knickstelle der Einschnittmittelfläche verläuft, oder
c) zwischen der ersten Bezugslinie und der zweiten Bezugslinie liegt.

Ein derartiger Fahrzeugluftreifen ist beispielsweise aus der US 2005/0150581 A1 bekannt. Gemäß einem Ausführungsbeispiel weist der Fahrzeugluftreifen einen Laufstreifen mit Profilblöcken auf, welche mit in Draufsicht zick-zack-förmig verlaufenden Einschnitten mit einer Breite von insbesondere 0,5 mm bis 1,0 mm versehen sind, wobei die Einschnitte, im Querschnitt betrachtet, ebenfalls zick-zack-förmig verlaufen und aus einem radial äußeren Einschnittabschnitt, einem radial inneren Einschnittabschnitt und einem mittleren Einschnittabschnitt zusammengesetzt sind, wobei die Einschnittabschnitte zur radialen Richtung jeweils geneigt sind. Die radial innere Knickstelle liegt auf einer in radialer Richtung verlaufenden Bezugslinie, welche am radial äußeren Ende des radial äußeren Einschnittabschnittes durch die Einschnittmittelfläche verläuft. Bei mit solchen Einschnitten korrespondierenden, bei der Vulkanisation des Reifens die Einschnitte ausformenden Lamellen sollen die Gefahr, dass sich diese beim Entformen des Reifens aus der Vulkanisationsform verbiegen, reduziert sein.

Aus der US 2015/0266346 A1 ist ein weiterer Fahrzeugluftreifen mit einem Laufstreifen mit Profilblöcken bekannt, welche Einschnitte aufweisen, die in radialer Richtung derart aus mehreren Einschnittabschnitten zusammensetzt sind, sodass die Einschnitte in radialer Richtung zick-zack-förmig verlaufen.

Die EP 2 138 330 A1 offenbart einen Fahrzeugluftreifen mit einem Laufstreifen mit Profilblöcken mit Einschnitten, welche, im Querschnitt betrachtet, jeweils zumindest drei zick-zack-förmig aneinander anschließende Einschnittabschnitte aufweisen. Der radial äußere und der radial innere Einschnittabschnitt weist in radialer Richtung eine größere Länge auf als der mittlere Einschnittabschnitt. Der mittlere Einschnittabschnitt weist eine größere Breite auf als der radial innere und der radial äußere Einschnittabschnitt. Die Profilblöcke sollen beim Abrollen eine geringe Steifigkeit und eine hohe Beweglichkeit aufweisen. Beim Einwirken von hohen dynamischen Kräften, beispielsweise beim Bremsen, sollen sich die Profilblöcke ähnlich zu einschnittfreien Profilblöcken verhalten.

Ferner ist aus der DE 10 2007 059 291 A1 ein Fahrzeugluftreifen bekannt, dessen Laufstreifen gemäß einem Ausführungsbeispiel Profilblöcke aufweist, welche mit in Draufsicht wellenförmig verlaufenden, insbesondere auf Profiltiefe reichende, eine Breite von 0,4 mm bis 0,6 mm aufweisenden Einschnitten versehen sind, welche, im Querschnitt betrachtet, einen radial äußeren Einschnittabschnitt, einen mittleren Einschnittabschnitt und einen radial inneren Einschnittabschnitt aufweisen. Der radial äußere Einschnittabschnitt verläuft unter Beibehaltung der Wellenform zur radialen Richtung unter einem spitzen Winkel. Der mittlere Einschnittabschnitt schließt über einen Knickbereich an den radial äußeren Einschnittabschnitt an, wobei im mittleren Einschnittabschnitt die Amplitude der Wellenform in Richtung zum radial inneren Ende des mittleren Einschnittabschnittes kontinuierlich auf null abnimmt. Der radial äußere Einschnittabschnitt und der mittlere Einschnittabschnitt verlaufen zur radialen Richtung jeweils unter einem Winkel von 20° bis 50°, insbesondere von etwa 35°. Der radial innere Einschnittabschnitt verläuft in radialer Richtung und ist unstrukturiert ausgeführt. Der Reifen soll ausgewogene Eigenschaften beim Fahren auf trockener, mit Schnee bedeckter und nasser Fahrbahn aufweisen.

Aus der WO 94/21478 A1 ist ein Fahrzeugluftreifen bekannt, welcher gemäß einem Ausführungsbeispiel einen Laufstreifen mit Profilblöcken mit in Draufsicht in axialer Richtung verlaufenden Einschnitten mit einer Breite von 0,4 mm bis 0,6 mm aufweist. Jeder Einschnitt verläuft, im Querschnitt betrachtet, zick-zack-förmig und setzt sich aus einem radial äußeren Einschnittabschnitt, einem mittleren Einschnittabschnitt und einem radial inneren Einschnittabschnitt zusammen.

Die bei Reifen der eingangs genannten Art in den Profilpositiven des Laufstreifens ausgebildeten Einschnitte sind vor allem für die Schneeperformance günstig. Im Hinblick auf die sich über den Laufstreifenabrieb ändernde Steifigkeit der Profilpositive sind die Einschnitte verbesserungsfähig, insbesondere um einen ungleichmäßigen Abrieb durch eine auf ungleichmäßige Weise abnehmende Steifigkeit der Profilpositive zu vermeiden.

Der Erfindung liegt daher die Aufgabe zugrunde, bei einem Fahrzeugluftreifen der eingangs genannten Art eine gute Schneeperformance und eine gleichmäßige bzw. im Wesentlichen gleichmäßige Steifigkeit der Profilpositive über den Laufstreifenabrieb sicherzustellen.

Gelöst wird die gestellte Aufgabe erfindungsgemäß dadurch, dass der radial äußere Einschnittabschnitt zur radialen Richtung unter einem Winkel von 15° bis 30°, der radial innere Einschnittabschnitt zur radialen Richtung unter einem Winkel von 15° bis 30° und der mittlere Einschnittabschnitt zur radialen Richtung unter einem Winkel von 0° verläuft, wobei sich der Einschnitt zumindest im Teilbereich aus dem radial äußeren Einschnittabschnitt, dem radial inneren Einschnittabschnitt und dem mittleren Einschnittabschnitt zusammensetzt.

Alternativ wird die gestellte Aufgabe erfindungsgemäß dadurch gelöst, dass der radial äußere Einschnittabschnitt zur radialen Richtung unter einem Winkel von 15° bis 30°, der radial innere Einschnittabschnitt zur radialen Richtung unter einem Winkel von 15° bis 30° und der mittlere Einschnittabschnitt zur radialen Richtung unter einem Winkel von 0° verläuft, wobei sich der Einschnitt zumindest im Teilbereich aus dem radial äußeren Einschnittabschnitt, dem radial inneren Einschnittabschnitt, dem mittleren Einschnittabschnitt und einem zur radialer Richtung unter einem Winkel von 0° bis 2° verlaufenden, von der Laufstreifenperipherie ausgehenden, weiteren Einschnittabschnitt mit einer in radialer Richtung ermittelten Länge von bis zu 1,0 mm, insbesondere von bis zu 0,5 mm, zusammensetzt.

Der radial äußere Einschnittabschnitt ermöglicht bei neuem bzw. wenig abgefahrenem Reifen durch seinen speziellen Winkel relativ zur radialen Richtung ein für die Schneegriffeigenschaften sehr günstiges Griffverhalten in Bereich der Einschnittkanten. Der radial innere Einschnittabschnitt sorgt in analoger Weise bei deutlich abgefahrenem Laufstreifen für einen erneuten, die Schneegriffeigenschaften betreffenden "Performanceboost". Es ist somit eine gute Schneeperformance über den gesamten Laufstreifenabrieb sichergestellt. Die spezielle Lage der radial inneren Knickstelle der Einschnittmittelfläche sorgt für eine gleichmäßige Steifigkeit der Profilelemente über den Laufstreifenabrieb.

Die Auslegung des mittleren Einschnittabschnittes sorgt für eine besonders gleichmäßige Steifigkeit der Profilpositive über den Laufstreifenabrieb.

Der weitere Einschnittabschnitt lässt die erläuterten, vorteilhaften Auswirkungen des radial äußeren Einschnittabschnittes auf die Schneegriffeigenschaften unbeeinflusst. Der weitere Einschnittabschnitt ist vor allem aus fertigungstechnischen Gründen bei der Vulkanisationsformherstellung vorteilhaft.

Gemäß einer weiteren bevorzugten Ausführung ist der Einschnitt im Teilbereich in radialer Richtung auf die maximale Tiefe ausgeführt, wodurch die Aufgabe auf besonders vorteilhafte Weise gelöst wird.

Bevorzugter Weise beträgt die maximale Tiefe des Einschnittes höchstens 100% der Profiltiefe.

Insbesondere beträgt die maximale Tiefe des Einschnittes höchstens der um 0,5 mm, bevorzugt höchstens der um 1,5 mm, verringerten Profiltiefe.

Bevorzugter Weise beträgt der Winkel, unter welchem der radial äußere Einschnittabschnitt zur radialen Richtung verläuft, 18° bis 27°, insbesondere 20° bis 25°. Ein derartiger Winkel ist bei neuem bzw. wenig abgefahrenem Reifen für die Schneegriffeigenschaften von Vorteil.

Insbesondere ist es für den erwähnten Performanceboost von Vorteil, wenn der Winkel, unter welchem der radial innere Einschnittabschnitt zur radialen Richtung verläuft, 18° bis 27°, insbesondere 20° bis 25°, beträgt.

Eine weitere bevorzugte Ausführung ist dadurch gekennzeichnet, dass der Winkel, unter welchem der radial äußere Einschnittabschnitt zur radialen Richtung verläuft, vom Winkel, unter welchem der radial innere Einschnittabschnitt zur radialen Richtung verläuft, um höchstens 3° abweicht oder dass diese Winkel übereinstimmen. Diese Maßnahme trägt zusätzlich zu einer gleichmäßigen Steifigkeit der Profilpositive über den Laufstreifenabrieb bei.

Eine weitere bevorzugte Ausführung, welche zur gleichmäßigen Steifigkeit der Profilpositive über den Laufstreifenabrieb beiträgt, ist dadurch gekennzeichnet, dass die Länge des radial äußeren Einschnittabschnittes von der Länge des radial inneren Einschnittabschnittes um höchstens 0,3 mm abweicht oder dass diese Längen übereinstimmen.

Bevorzugter Weise beträgt die Länge des radial äußeren Einschnittabschnittes und die Länge des radial inneren Einschnittabschnittes bis zu 2,5 mm.

Weitere Merkmale, Vorteile und Einzelheiten der Erfindung werden nun anhand der Zeichnung, die schematisch Ausführungsbeispiele zeigt, näher beschrieben. Dabei zeigen
Fig. 1 einen Schnitt durch einen Profilblock eines Laufstreifens eines Fahrzeugluftreifens mit einer Ausführungsvariante der Erfindung und
Fig. 2 einen Schnitt durch einen Profilblock eines Laufstreifens eines Fahrzeugluftreifens mit einer nicht unter den Schutzbereich der Ansprüche fallenden Ausführungsvariante.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Leichte LKWs mit zGM ≤ 7,5 t), wobei die Reifen insbesondere für den Ganzjahreseinsatz oder zum Fahren unter winterlichen Fahrbedingungen vorgesehen sind.

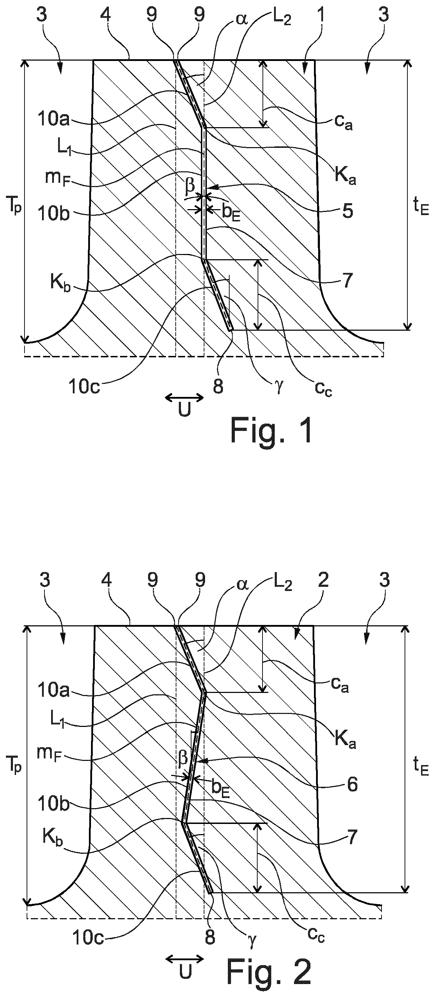

Fig. 1 und Fig. 2 zeigen je einen Querschnitt durch einen Profilblock 1 (Fig. 1), 2 (Fig. 2), welcher zu einem Laufstreifen eines Fahrzeugluftreifens gehört. Der Laufstreifen weist eine Vielzahl von Profilblöcken 1 und/oder 2 auf. Die Umfangsrichtung des Reifens ist jeweils durch einen Doppelpfeil U gekennzeichnet. Der Profilblock 1, 2 ist in Umfangsrichtung durch in Fig. 1 und Fig. 2 lediglich angedeutete Querrillen 3 sowie seitlich durch weitere, nicht gezeigte Rillen, beispielsweise Umfangsrillen, begrenzt.

Beim den gezeigten Ausführungsbeispielen sind die Querrillen 3 in radialer Richtung auf die jeweils vorgesehene Profiltiefe T_{P} ausgeführt, welche beim erwähnten, bevorzugten Reifentyp üblicherweise 6,5 mm bis 12,0 mm, insbesondere 7,0 mm bis 9,5 mm, beträgt.

Der Profilblock 1, 2 weist an der Laufstreifenperipherie eine Blockaußenfläche 4 auf und ist - bezogen auf seine Umfangserstreckung - in seinem mittleren Bereich mit einem von der Blockaußenfläche 4 ausgehenden, ins radial Innere des Profilblockes 1, 2 hineinragenden Einschnitt 5 (Profilblock 1), 6 (Profilblock 2) mit zwei an der Blockaußenfläche 4 liegenden Einschnittkanten 9 versehen. Der in Fig. 1 und Fig. 2 gezeigte Querschnitt verläuft, betrachtet in Draufsicht (nicht gezeigt), jeweils senkrecht zu den Einschnittkanten 9.

Der Einschnitt 5, 6 kann den Profilblock 1 bzw. 2 durchqueren oder ein- bzw. beidseitig innerhalb des Profilblockes 1, 2 enden und verläuft, jeweils in Draufsicht betrachtet, sowie zur axialen Richtung unter einem Winkel von 0° bis 50°, insbesondere von bis zu 35° sowie gerade, bogenförmig, wellenförmig oder wellenförmig und zusätzlich insgesamt gebogen. Der Winkel bezieht sich bei in Draufsicht insgesamt gerade verlaufenden Einschnitten auf die Einschnittmittellinie und bei in Draufsicht bogenförmig bzw. insgesamt gebogen verlaufenden Einschnitten auf eine die Enden der Einschnittmittellinie verbindende gerade Linie. Bei wellenförmig verlaufenden Einschnitten fällt die Einschnittmittellinie mit der in Draufsicht der Ausbreitungsrichtung der Welle entsprechenden Wellenmittellinie zusammen.

Der Einschnitt 5, 6 ist durch zwei von den Einschnittkanten 9 ausgehenden, einander gegenüberliegenden Einschnittwänden 7 und einem Einschnittgrund 8 begrenzt, weist eine zwischen sowie senkrecht zu den Einschnittwänden 7 ermittelte, konstante Breite b_{E} von 0,4 mm bis 1,2 mm, insbesondere von bis zu 0,8 mm, eine in radialer Richtung gemessene maximale Tiefe t_{E} (Tiefe an der tiefsten Stelle) und eine zu den Einschnittwänden 7, 7' übereinstimmend beabstandete Einschnittmittelfläche m_{F} auf. Die maximale Tiefe t_{E} beträgt zumindest der um 2,0 mm verringerten Profiltiefe T_{P} und höchstens 100% der Profiltiefe T_{P}, wobei die maximale Tiefe t_{E} vorzugsweise höchstens der um 0,5 mm, besonders bevorzugt höchstens der um 1,5 mm, verringerten Profiltiefe T_{P} entspricht. Beim gezeigten Ausführungsbeispiel ist der Einschnitt 5, 6 über seine gesamte Erstreckung auf die maximale Tiefe t_{E} ausgeführt.

Der Einschnitt 5, 6 weist, im in Draufsicht senkrecht zu den Einschnittkanten 9 verlaufenden Querschnitt betrachtet, einen gerade verlaufenden, radial äußeren Einschnittabschnitt 10a, einen an diesen anschließenden, gerade verlaufenden, mittleren Einschnittabschnitt 10b und einen gerade verlaufenden, radial inneren Einschnittabschnitt 10c auf. Beim gezeigten Ausführungsbeispiel setzt sich der Einschnitt 5, 6 aus den Einschnittabschnitten 10a, 10b, 10c zusammen. Alternativ kann der Einschnitt 5, 6 zusätzlich zu den Einschnittabschnitten 10a, 10b, 10c einen in radialer Richtung oder zu dieser unter einem Winkel von 0° bis zu 2° verlaufenden, von der Blockaußenfläche 4 ausgehenden, an den radial äußeren Einschnittabschnitt 10a anschließenden weiteren Einschnittabschnitt aufweisen, welcher - bezogen auf die Einschnittmittelfläche m_{F} - eine in radialer Richtung ermittelte Länge von bis zu 1,0 mm, insbesondere von bis zu 0,5 mm, aufweist.

Die nachfolgenden, weiteren Erläuterungen beziehen sich auf den in Draufsicht senkrecht zu den Einschnittkanten 9 verlaufenden Querschnitt durch den Einschnitt 5, 6.

Der radial äußere Einschnittabschnitt 10a verläuft zur radialen Richtung unter einem Winkel α von 15° bis 30°, insbesondere von 18° bis 27°, bevorzugt von 20° bis 25° und weist - bezogen auf die Einschnittmittelfläche m_{F} - eine in radialer Richtung ermittelte Länge cₐ von 2,0 mm bis 3,0 mm, insbesondere von bis zu 2,5 mm, auf. Der radial innere Einschnittabschnitt 10c verläuft zur radialen Richtung unter einem Winkel γ von 15° bis 30°, insbesondere von 18° bis 27°, bevorzugt von 20° bis 25° und weist - bezogen auf die Einschnittmittelfläche m_{F} - eine in radialer Richtung ermittelte Länge c_{c} von 2,0 mm bis 3,0 mm, insbesondere von bis zu 2,5 mm, auf. Bevorzugter Weise weicht die Länge cₐ von der Länge c_{c} um höchstens 0,3 mm ab, wobei es besonders bevorzugt ist, wenn die Längen cₐ, c_{c} übereinstimmen. Bevorzugter Weise weicht der Winkel α vom Winkel γ um höchstens 3° ab. Besonders bevorzugter Weise stimmt der Winkel α mit dem Winkel γ überein.

Die Einschnittmittelfläche m_{F} weist am gegenseitigen Anschluss der Einschnittabschnitte 10a, 10b eine radial äußere Knickstelle Kₐ und am gegenseitigen Anschluss der Einschnittabschnitte 10b, 10c eine radial innere Knickstelle K_{b} auf, wobei die Knickstellen Kₐ, K_{b} im gezeigten Querschnitt als Knickpunkte erscheinen. In Fig. 1 und Fig. 2 ist jeweils eine in radialer Richtung durch das radial äußere Ende der Einschnittmittelfläche m_{F} verlaufende Bezugslinie L₁ und eine in radialer Richtung durch die radial äußere Knickstelle Kₐ verlaufende Bezugslinie L₂ eingezeichnet.

Die Ausgestaltung des Einschnittes 5, 6 ist derart, dass sich die Knickstelle K_{b} auf der Bezugslinie L₁, auf der Bezugslinie L₂ (Einschnitt 5) oder zwischen der Bezugslinie L₁ und Bezugslinie L₂ (Einschnitt 6) befindet.

Bevorzugter Weise ist die Ausgestaltung des Einschnittes 5, 6 ferner derart, dass der mittlere Einschnittabschnitt 10b - bezogen auf die Einschnittmittelfläche m_{F} - zur radialen Richtung unter einem Winkel β von 0° bis 30°, insbesondere von bis zu 20°, bevorzugt von bis zu 18°, besonders bevorzugt von bis zu 15°, ganz besonders bevorzugt von bis zu 10° verläuft. Beim Ausführungsbeispiel in Fig. 1 beträgt der Winkel β 0°.

Die Erfindung ist auf das beschriebene Ausführungsbeispiel nicht beschränkt.

Insbesondere können die Einschnitte auch in Profilrippen, welche in Umfangsrichtung umlaufen, ausgebildet sein. Die Profilrippe bzw. die Profilblöcke können mit mehreren der Einschnitte versehen sein. Ferner können die Einschnitte in einer schulterseitigen Profilrippe bzw. in schulterseitigen Profilblöcken verlaufen. Die Einschnitte weisen die beschriebenen drei Einschnittabschnitte jeweils zumindest in einem Teil des zugehörigen Einschnittes auf, wobei dieser Teil in Draufsicht vorzugsweise zumindest über den Großteil des Einschnittes reicht.

### Bezugszeichenliste

- 1: Profilblock
- 2: Profilblock
- 3: Querrille
- 4: Blockaußenfläche
- 5: Einschnitt
- 6: Einschnitt
- 7: Einschnittwand
- 8: Einschnittgrund
- 9: Einschnittkante
- 10a: radial äußerer Einschnittabschnitt
- 10b: mittlerer Einschnittabschnitt
- 10c: radial innerer Einschnittabschnitt
- b_{E}: Breite
- Cₐ, C_{c}: Länge
- Kₐ: radial äußere Knickstelle
- K_{b}: radial innere Knickstelle
- L₁, L₂: Bezugslinie
- m_{F}: Einschnittmittelfläche
- t_{E}: maximale Tiefe
- T_{P}: Profiltiefe
- U: Doppelpfeil (Umfangsrichtung)
- a, β, γ: Winkel

## Patentansprüche

1. Fahrzeugluftreifen mit einem Laufstreifen mit Profilblöcken (1, 2) oder zumindest einer Profilrippe jeweils mit in Draufsicht unter einem Winkel von 0° bis zu 50° zur axialen Richtung verlaufenden, einen Einschnittgrund (8) und eine Einschnittmittelfläche (m_{F}) aufweisenden Einschnitten (5) mit einer Breite (b_{E}) von 0,4 mm bis 1,2 mm und einer maximalen Tiefe (t_{E}), welche zumindest der um 2,0 mm verringerten Profiltiefe (T_{P}) entspricht, wobei jeder Einschnitt (5) zumindest in einem in Draufsicht vorliegenden Teilbereich, im Querschnitt betrachtet, einen zur radialen Richtung geneigten, radial äußeren Einschnittabschnitt (10a), einen bis zum Einschnittgrund (8) reichenden, bezüglich der radialen Richtung gleichsinnig zum radial äußeren Einschnittabschnitt (10a) geneigten, radial inneren Einschnittabschnitt (10c) und einen zwischen diesen beiden Einschnittabschnitten (10a, 10c) verlaufenden mittleren Einschnittabschnitt (10b) aufweist, wobei die Einschnittmittelfläche (m_{F}) am Anschluss des radial äußeren Einschnittabschnittes (10a) an den mittleren Einschnittabschnitt (10b) eine radial äußere Knickstelle (Kₐ) und am Anschluss des mittleren Einschnittabschnittes (10b) an den radial inneren Einschnittabschnitt (10c) eine radial innere Knickstelle (K_{b}) aufweist, wobei der radial äußere Einschnittabschnitt (10a) und der radial innere Einschnittabschnitt (10c) jeweils eine auf die Einschnittmittelfläche (m_{F}) bezogene, in radialer Richtung ermittelte Länge (cₐ, c_{c}) von 2,0 mm bis 3,0 mm aufweisen,
wobei die radial innere Knickstelle (K_{b}) der Einschnittmittelfläche (m_{F})
a) auf einer in radialer Richtung verlaufenden ersten Bezugslinie (L₁), welche am radial äußeren Ende des radial äußeren Einschnittabschnittes (10a) durch die Einschnittmittelfläche (m_{F}) verläuft,
b) auf einer in radialer Richtung verlaufenden zweiten Bezugslinie (L₂), welche durch die radial äußere Knickstelle (Kₐ) der Einschnittmittelfläche (m_{F}) verläuft, oder
c) zwischen der ersten Bezugslinie (L₁) und der zweiten Bezugslinie (L₂) liegt,
**dadurch gekennzeichnet,**
**dass** der radial äußere Einschnittabschnitt (10a) zur radialen Richtung unter einem Winkel (α) von 15° bis 30°, der radial innere Einschnittabschnitt (10c) zur radialen Richtung unter einem Winkel (γ) von 15° bis 30° und der mittlere Einschnittabschnitt (10b) zur radialen Richtung unter einem Winkel (β) von 0° verläuft, wobei sich der Einschnitt (5) zumindest im Teilbereich aus dem radial äußeren Einschnittabschnitt (10a), dem radial inneren Einschnittabschnitt (10c) und dem mittleren Einschnittabschnitt (10b) zusammensetzt.

2. Fahrzeugluftreifen mit einem Laufstreifen mit Profilblöcken (1, 2) oder zumindest einer Profilrippe jeweils mit in Draufsicht unter einem Winkel von 0° bis zu 50° zur axialen Richtung verlaufenden, einen Einschnittgrund (8) und eine Einschnittmittelfläche (m_{F}) aufweisenden Einschnitten (5) mit einer Breite (b_{E}) von 0,4 mm bis 1,2 mm und einer maximalen Tiefe (t_{E}), welche zumindest der um 2,0 mm verringerten Profiltiefe (T_{P}) entspricht, wobei jeder Einschnitt (5) zumindest in einem in Draufsicht vorliegenden Teilbereich, im Querschnitt betrachtet, einen zur radialen Richtung geneigten, radial äußeren Einschnittabschnitt (10a), einen bis zum Einschnittgrund (8) reichenden, bezüglich der radialen Richtung gleichsinnig zum radial äußeren Einschnittabschnitt (10a) geneigten, radial inneren Einschnittabschnitt (10c) und einen zwischen diesen beiden Einschnittabschnitten (10a, 10c) verlaufenden mittleren Einschnittabschnitt (10b) aufweist, wobei die Einschnittmittelfläche (m_{F}) am Anschluss des radial äußeren Einschnittabschnittes (10a) an den mittleren Einschnittabschnitt (10b) eine radial äußere Knickstelle (Kₐ) und am Anschluss des mittleren Einschnittabschnittes (10b) an den radial inneren Einschnittabschnitt (10c) eine radial innere Knickstelle (K_{b}) aufweist, wobei der radial äußere Einschnittabschnitt (10a) und der radial innere Einschnittabschnitt (10c) jeweils eine auf die Einschnittmittelfläche (m_{F}) bezogene, in radialer Richtung ermittelte Länge (cₐ, c_{c}) von 2,0 mm bis 3,0 mm aufweisen,
wobei die radial innere Knickstelle (K_{b}) der Einschnittmittelfläche (m_{F})
a) auf einer in radialer Richtung verlaufenden ersten Bezugslinie (L₁), welche am radial äußeren Ende des radial äußeren Einschnittabschnittes (10a) durch die Einschnittmittelfläche (m_{F}) verläuft,
b) auf einer in radialer Richtung verlaufenden zweiten Bezugslinie (L₂), welche durch die radial äußere Knickstelle (Kₐ) der Einschnittmittelfläche (m_{F}) verläuft, oder
c) zwischen der ersten Bezugslinie (L₁) und der zweiten Bezugslinie (L₂) liegt,
**dadurch gekennzeichnet,**
**dass** der radial äußere Einschnittabschnitt (10a) zur radialen Richtung unter einem Winkel (α) von 15° bis 30°, der radial innere Einschnittabschnitt (10c) zur radialen Richtung unter einem Winkel (γ) von 15° bis 30° und der mittlere Einschnittabschnitt (10b) zur radialen Richtung unter einem Winkel (β) von 0° verläuft, wobei sich der Einschnitt (5) zumindest im Teilbereich aus dem radial äußeren Einschnittabschnitt (10a), dem radial inneren Einschnittabschnitt (10c), dem mittleren Einschnittabschnitt (10b) und einem zur radialer Richtung unter einem Winkel von 0° bis 2° verlaufenden, von der Laufstreifenperipherie ausgehenden, weiteren Einschnittabschnitt mit einer in radialer Richtung ermittelten Länge von bis zu 1,0 mm, insbesondere von bis zu 0,5 mm, zusammensetzt.

3. Fahrzeugluftreifen nach Anspruch 1 oder 2, **dadurch gekennzeichnet, dass** der Einschnitt (10) im Teilbereich in radialer Richtung auf die maximale Tiefe (t_{E}) ausgeführt ist.

4. Fahrzeugluftreifen nach einem der Ansprüche 1 bis 3, **dadurch gekennzeichnet, dass** die maximale Tiefe (t_{E}) des Einschnittes (5) höchstens 100% der Profiltiefe (T_{P}) beträgt.

5. Fahrzeugluftreifen nach einem der Ansprüche 1 bis 3, **dadurch gekennzeichnet, dass** die maximale Tiefe (t_{E}) des Einschnittes (5) höchstens der um 0,5 mm, bevorzugt höchstens der um 1,5 mm, verringerten Profiltiefe (T_{P}) beträgt.

6. Fahrzeugluftreifen nach einem der Ansprüche 1 bis 5, **dadurch gekennzeichnet, dass** der Winkel (α), unter welchem der radial äußere Einschnittabschnitt (10a) zur radialen Richtung verläuft, 18° bis 27°, insbesondere 20° bis 25°, beträgt.

7. Fahrzeugluftreifen nach einem der Ansprüche 1 bis 6, **dadurch gekennzeichnet, dass** der Winkel (γ), unter welchem der radial innere Einschnittabschnitt (10c) zur radialen Richtung verläuft, 18° bis 27°, insbesondere 20° bis 25°, beträgt.

8. Fahrzeugluftreifen nach einem der Ansprüche 1 bis 7, **dadurch gekennzeichnet, dass** der Winkel (α), unter welchem der radial äußere Einschnittabschnitt (10a) zur radialen Richtung verläuft, vom Winkel (γ), unter welchem der radial innere Einschnittabschnitt (10c) zur radialen Richtung verläuft, um höchstens 3° abweicht oder dass diese Winkel (α, γ) übereinstimmen.

9. Fahrzeugluftreifen nach einem der Ansprüche 1 bis 8, **dadurch gekennzeichnet, dass** die Länge (cₐ) des radial äußeren Einschnittabschnittes (10a) von der Länge (c_{c}) des radial inneren Einschnittabschnittes (10c) um höchstens 0,3 mm abweicht oder dass diese Längen (cₐ, c_{c}) übereinstimmen.

10. Fahrzeugluftreifen nach einem der Ansprüche 1 bis 9, **dadurch gekennzeichnet, dass** die Länge (cₐ) des radial äußeren Einschnittabschnittes (10a) und die Länge (c_{c}) des radial inneren Einschnittabschnittes (10c) bis zu 2,5 mm beträgt.

## Claims

1. Pneumatic vehicle tyre having a tread with profile blocks (1, 2) or at least one profile rib, in each case having sipes (5) which, in plan view, extend at an angle of 0° to 50° to the axial direction, have a sipe base (8) and a sipe midsurface (m_{F}), have a width (b_{E}) of 0.4 mm to 1.2 mm and have a maximum depth (t_{E}) which corresponds at least to the profile depth (T_{P}) reduced by 2.0 mm, wherein, at least in a sub-region present in plan view, each sipe (5), when viewed in the cross section, has a radially outer sipe portion (10a) inclined in relation to the radial direction, a radially inner sipe portion (10c) extending as far as the sipe base (8) and inclined in the same direction as the radially outer sipe portion (10a) in relation to the radial direction, and a middle sipe portion (10b) extending between these two sipe portions (10a, 10c), wherein the sipe midsurface (m_{F}) has a radially outer bend (Kₐ) at the connection of the radially outer sipe portion (10a) to the middle sipe portion (10b) and a radially inner bend (K_{b}) at the connection of the middle sipe portion (10b) to the radially inner sipe portion (10c), wherein the radially outer sipe portion (10a) and the radially inner sipe portion (10c) each have a length (cₐ, c_{c}) of 2.0 mm to 3.0 mm based on the sipe midsurface (m_{F}) and determined in a radial direction,
wherein the radially inner bend (K_{b}) of the sipe midsurface (m_{F}) is situated
a) on a first reference line (L₁) which extends in the radial direction and extends through the sipe midsurface (m_{F}) at the radially outer end of the radially outer sipe portion (10a),
b) on a second reference line (L₂) which extends in the radial direction and extends through the radially outer bend (Kₐ) of the sipe midsurface (m_{F}), or
c) between the first reference line (L₁) and the second reference line (L₂),
**characterized**
**in that** the radially outer sipe portion (10a) extends at an angle (α) of 15° to 30° to the radial direction, the radially inner sipe portion (10c) extends at an angle (γ) of 15° to 30° to the radial direction and the middle sipe portion (10b) extends at an angle (β) of 0° to the radial direction, wherein, at least in the sub-region, the sipe (5) is made up of the radially outer sipe portion (10a), the radially inner sipe portion (10c) and the middle sipe portion (10b).

2. Pneumatic vehicle tyre having a tread with profile blocks (1, 2) or at least one profile rib, in each case having sipes (5) which, in plan view, extend at an angle of 0° to 50° to the axial direction, have a sipe base (8) and a sipe midsurface (m_{F}), have a width (b_{E}) of 0.4 mm to 1.2 mm and have a maximum depth (t_{E}) which corresponds at least to the profile depth (T_{P}) reduced by 2.0 mm, wherein, at least in a sub-region present in plan view, each sipe (5), when viewed in the cross section, has a radially outer sipe portion (10a) inclined in relation to the radial direction, a radially inner sipe portion (10c) extending as far as the sipe base (8) and inclined in the same direction as the radially outer sipe portion (10a) in relation to the radial direction, and a middle sipe portion (10b) extending between these two sipe portions (10a, 10c), wherein the sipe midsurface (m_{F}) has a radially outer bend (Kₐ) at the connection of the radially outer sipe portion (10a) to the middle sipe portion (10b) and a radially inner bend (K_{b}) at the connection of the middle sipe portion (10b) to the radially inner sipe portion (10c), wherein the radially outer sipe portion (10a) and the radially inner sipe portion (10c) each have a length (cₐ, c_{c}) of 2.0 mm to 3.0 mm based on the sipe midsurface (m_{F}) and determined in a radial direction,
wherein the radially inner bend (K_{b}) of the sipe midsurface (m_{F}) is situated
a) on a first reference line (L₁) which extends in the radial direction and extends through the sipe midsurface (m_{F}) at the radially outer end of the radially outer sipe portion (10a),
b) on a second reference line (L₂) which extends in the radial direction and extends through the radially outer bend (Kₐ) of the sipe midsurface (m_{F}), or
c) between the first reference line (L₁) and the second reference line (L₂),
**characterized**
**in that** the radially outer sipe portion (10a) extends at an angle (α) of 15° to 30° to the radial direction, the radially inner sipe portion (10c) extends at an angle (γ) of 15° to 30° to the radial direction and the middle sipe portion (10b) extends at an angle (β) of 0° to the radial direction, wherein, at least in the sub-region, the sipe (5) is made up of the radially outer sipe portion (10a), the radially inner sipe portion (10c), the middle sipe portion (10b) and a further sipe portion which extends at an angle of 0° to 2° to the radial direction, proceeds from the tread periphery and has a length of up to 1.0 mm, in particular of up to 0.5 mm, determined in a radial direction.

3. Pneumatic vehicle tyre according to Claim 1 or 2, **characterized in that**, in the sub-region, the sipe (10) is formed to the maximum depth (t_{E}) in the radial direction.

4. Pneumatic vehicle tyre according to one of Claims 1 to 3, **characterized in that** the maximum depth (t_{E}) of the sipe (5) is at most 100% of the profile depth (T_{P}).

5. Pneumatic vehicle tyre according to one of Claims 1 to 3, **characterized in that** the maximum depth (t_{E}) of the sipe (5) is at most the profile depth (T_{P}) reduced by 0.5 mm, preferably at most said profile depth reduced by 1.5 mm.

6. Pneumatic vehicle tyre according to one of Claims 1 to 5, **characterized in that** the angle (α) at which the radially outer sipe portion (10a) extends to the radial direction is 18° to 27°, in particular 20° to 25°.

7. Pneumatic vehicle tyre according to one of Claims 1 to 6, **characterized in that** the angle (γ) at which the radially inner sipe portion (10c) extends to the radial direction is 18° to 27°, in particular 20° to 25°.

8. Pneumatic vehicle tyre according to one of Claims 1 to 7, **characterized in that** the angle (α) at which the radially outer sipe portion (10a) extends to the radial direction differs from the angle (γ) at which the radially inner sipe portion (10c) extends to the radial direction by at most 3°, or **in that** these angles (α, γ) correspond.

9. Pneumatic vehicle tyre according to one of Claims 1 to 8, **characterized in that** the length (cₐ) of the radially outer sipe portion (10a) differs from the length (c_{c}) of the radially inner sipe portion (10c) by at most 0.3 mm, or **in that** these lengths (cₐ, c_{c}) correspond.

10. Pneumatic vehicle tyre according to one of Claims 1 to 9, **characterized in that** the length (cₐ) of the radially outer sipe portion (10a) and the length (c_{c}) of the radially inner sipe portion (10c) are up to 2.5 mm.

## Revendications

1. Pneumatique de véhicule avec une bande de roulement avec des blocs profilés (1, 2) ou au moins une nervure profilée respectivement avec des entailles (5) s'étendant dans une vue d'en haut selon un angle de 0° à 50° par rapport à la direction axiale, comportant un fond (8) d'entaille et une surface centrale (m_{F}) d'entaille avec une largeur (b_{E}) de 0,4 mm à 1,2 mm et une profondeur (t_{E}) maximale, qui correspond au moins à la profondeur de profil (T_{P}) réduite de 2,0 mm, chaque entaille (5) comportant, au moins dans une zone partielle présente dans la vue d'en haut, vue dans la section transversale, une section d'entaille radialement extérieure (10a) inclinée par rapport à la direction radiale, une section d'entaille radialement intérieure (10c) inclinée dans le même sens par rapport à la section d'entaille radialement extérieure (10a) par rapport à la direction radiale, allant jusqu'au fond (8) d'entaille, et une section d'entaille centrale (10b) s'étendant entre lesdites deux sections d'entaille (10a, 10c), la surface centrale (m_{F}) d'entaille comportant sur le raccordement de la section d'entaille radialement extérieure (10a) à la section d'entaille centrale (10b), un point d'inflexion radialement extérieur (Kₐ) et, sur le raccordement de la section d'entaille centrale (10b) à la section d'entaille radialement intérieure (10c), un point d'inflexion radialement intérieur (K_{b}), la section d'entaille radialement extérieure (10a) et la section d'entaille radialement intérieure (10c) présentant chacune une longueur (cₐ, c_{c}) de 2,0 mm à 3,0 mm déterminée dans la direction radiale, se rapportant à la surface centrale (m_{F}) d'entaille,
le point d'inflexion radialement intérieur (K_{b}) de la surface centrale (m_{F}) d'entaille se trouvant
a) sur une première ligne de référence (L₁) s'étendant dans une direction radiale, laquelle s'étend, sur l'extrémité radialement extérieure de la section d'entaille radialement extérieure (10a), à travers la surface centrale (m_{F}) d'entaille,
b) sur une deuxième ligne de référence (L₂) s'étendant dans la direction radiale, laquelle s'étend à travers le point d'inflexion radialement extérieur (Kₐ) de la surface centrale (m_{F}) d'entaille, ou
c) entre la première ligne de référence (L₁) et la deuxième ligne de référence (L₂),
**caractérisé en ce**
**que** la section d'entaille radialement extérieure (10a) s'étend par rapport à la direction radiale selon un angle (α) de 15° à 30°, la section d'entaille radialement intérieure (10c) s'étend par rapport à la direction radiale selon un angle (γ) de 15° à 30° et la section d'entaille centrale (10b) s'étend par rapport à la direction radiale selon un angle (β) de 0°, l'entaille (5) se composant dans la zone partielle de la section d'entaille radialement extérieure (10a), de la section d'entaille radialement intérieure (10c) et de la section d'entaille centrale (10b).

2. Pneumatique de véhicule avec une bande de roulement avec des blocs profilés (1, 2) ou au moins une nervure profilée respectivement avec des entailles (5) s'étendant dans une vue d'en haut selon un angle de 0° à 50° par rapport à la direction axiale, comportant un fond (8) d'entaille et une surface centrale (m_{F}) d'entaille avec une largeur (b_{E}) de 0,4 mm à 1,2 mm et une profondeur (t_{E}) maximale, qui correspond au moins à la profondeur de profil (T_{P}) réduite de 2,0 mm, chaque entaille (5) comportant, au moins dans une zone partielle présente dans la vue d'en haut, vue dans la section transversale, une section d'entaille radialement extérieure (10a) inclinée par rapport à la direction radiale, une section d'entaille radialement intérieure (10c) inclinée dans le même sens par rapport à la section d'entaille radialement extérieure (10a) par rapport à la direction radiale, allant jusqu'au fond (8) d'entaille, et une section d'entaille centrale (10b) s'étendant entre lesdites deux sections d'entaille (10a, 10c), la surface centrale (m_{F}) d'entaille comportant sur le raccordement de la section d'entaille radialement extérieure (10a) à la section d'entaille centrale (10b), un point d'inflexion radialement extérieur (Kₐ) et, sur le raccordement de la section d'entaille centrale (10b) à la section d'entaille radialement intérieure (10c), un point d'inflexion radialement intérieur (K_{b}), la section d'entaille radialement extérieure (10a) et la section d'entaille radialement intérieure (10c) présentant chacune une longueur (cₐ, c_{c}) de 2,0 mm à 3,0 mm déterminée dans la direction radiale, se rapportant à la surface centrale (m_{F}) d'entaille,
le point d'inflexion radialement intérieur (K_{b}) de la surface centrale (m_{F}) d'entaille se trouvant
a) sur une première ligne de référence (L₁) s'étendant dans une direction radiale, laquelle s'étend, sur l'extrémité radialement extérieure de la section d'entaille radialement extérieure (10a), à travers la surface centrale (m_{F}) d'entaille,
b) sur une deuxième ligne de référence (L₂) s'étendant dans la direction radiale, laquelle s'étend à travers le point d'inflexion radialement extérieur (Kₐ) de la surface centrale (m_{F}) d'entaille, ou
c) entre la première ligne de référence (L₁) et la deuxième ligne de référence (L₂),
**caractérisé en ce**
**que** la section d'entaille radialement extérieure (10a) s'étend par rapport à a direction radiale selon un angle (α) de 15° à 30°, la section d'entaille radialement intérieure (10c) s'étend par rapport à la direction radiale selon un angle (γ) de 15° à 30° et la section d'entaille centrale (10b) s'étend par rapport à la direction radiale selon un angle (β) de 0°, l'entaille (5) se composant dans la zone partielle de la section d'entaille radialement extérieure (10a), de la section d'entaille radialement intérieure (10c) et de la section d'entaille centrale (10b) et d'une autre section d'entaille s'étendant par rapport à la direction radiale selon un angle de 0° à 2°, partant de la périphérie de bande roulement, avec une longueur, déterminée dans la direction radiale allant jusqu'à 1,0 mm, en particulier allant jusqu'à 0,5 mm.

3. Pneumatique de véhicule selon la revendication 1 ou 2, **caractérisé en ce que** l'entaille (10) est réalisée sur la profondeur (t_{E}) maximale dans la direction radiale dans la zone partielle.

4. Pneumatique de véhicule selon l'une des revendications 1 à 3, **caractérisé en ce que** la profondeur (t_{E}) maximale de l'entaille (5) est égale au maximum à 100 % de la profondeur de profil (T_{P}).

5. Pneumatique de véhicule selon la revendication 1 ou 3, **caractérisé en ce que** la profondeur (t_{E}) maximale de l'entaille (5) est égale au maximum à la profondeur de profil (T_{P}) réduite de 0,5 mm, de manière préférée au maximum de 1,5 mm.

6. Pneumatique de véhicule selon l'une des revendications 1 à 5, **caractérisé en ce que** l'angle (α) selon lequel la section d'entaille radialement extérieure (10a) s'étend par rapport à la direction radiale, va de 18° à 27°, en particulier de 20° à 25°.

7. Pneumatique pour véhicule selon l'une des revendications 1 à 6, **caractérisé en ce que** l'angle (γ), selon lequel la section d'entaille radialement intérieure (10c) s'étend par rapport à la direction radiale, va de 18° à 27°, en particulier de 20° à 25°.

8. Pneumatique de véhicule selon l'une des revendications 1 à 7, **caractérisé en ce que** l'angle (α), selon lequel la section d'entaille radialement extérieure (10a) s'étend par rapport à la direction radiale, diverge au maximum de 3° par rapport à l'angle (γ), selon lequel la section d'entaille radialement intérieure (10c) s'étend par rapport à la direction radiale ou que lesdits angles (α, γ) coïncident.

9. Pneumatique de véhicule selon l'une des revendications 1 à 8, **caractérisé en ce que** la longueur (cₐ) de la section d'entaille radialement extérieure (10a) diverge de la longueur (c_{c}) de la section d'entaille radialement intérieure (10c) au maximum de 0,3 mm ou que lesdites longueurs (cₐ, c_{c}) coïncident.

10. Pneumatique de véhicule selon l'une des revendications 1 à 9, **caractérisé en ce que** la longueur (cₐ) de la section d'entaille radialement extérieure (10a) et la longueur (c_{c}) de la section d'entaille radialement intérieure (10c) vont jusqu'à 2,5 mm.
